# EUROPEAN PATENT APPLICATION

(11) **EP 1 975 412 A2**
(43) Date of publication of application: **01.10.2008**
(21) Application number: 08005212.9
(22) Date of filing: 19.03.2008
(51) Int. Cl.: F04C 18/12, F04C 27/00

(54) **Shaft seal device for oil-free rotary compressor**

(30) Priority: 30.03.2007 JP 2007095581
(71) Applicant: ANEST IWATA CORPORATION, Yokohama-shi, Kanagawa-ken 223-8501 (JP)
(72) Inventor: Kimura, Hideyuki, Yokohama-shi Kanagawa-ken 223-8501 (JP); Sato, Shigemi, Yokohama-shi Kanagawa-ken 223-8501 (JP); Takemoto, Junichi, Yokohama-shi Kanagawa-ken 223-8501 (JP)
(74) Representative: Strehl Schübel-Hopf & Partner

(57) **Abstract**

A shaft seal device is provided, with which an optimum radial clearance is always maintained between the inner circumferential surface of a carbon ring and an outer circumferential surface of a rotor shaft sleeve when temperature thereof varies in operation of the oil-free rotary compressor. The shaft seal device to be located between the rotor chamber and rotor shaft bearing with a very small radial clearance retained between the inside surface of the shaft seal device and the outer surface of the rotor shaft sleeve (75) fixed to the rotor shaft to restrict gas leak between the rotor chamber and bearing side space is constructed such that the shaft seal device consists of an outer ring (85) and a carbon ring (83) which is fitted into the outer ring (85) with such interference that the interference does not reduce to zero even when they are heated to maximum temperature in operation of the compressor, and the outer ring (85) is made of material having a thermal expansion coefficient coequal to that of the rotor shaft sleeve (75).

## Description

### BACKGROUND OF THE INVENTION

### Field of the Invention

The present invention relates to a shaft seal device for preventing gas leak between the rotor chamber and bearing side space of an oil-free rotary compressor.

### Description of the Related Art

Carbon seals have been well known as a shaft seal. For example, in Japanese Laid-Open Patent Application No.11-294599(patent literature 1) is disclosed seal structure of a rotation shaft, in which, as shown in FIG.5, an end face of an annular carbon seal 05 retained in a bracket 04 fixed to a housing 01 contacts an end face 07 of the inner ring 06 of a roller bearing 02 retained in the housing 01 to support a rotation shaft 03. Sealing is performed at the sliding surface 07.

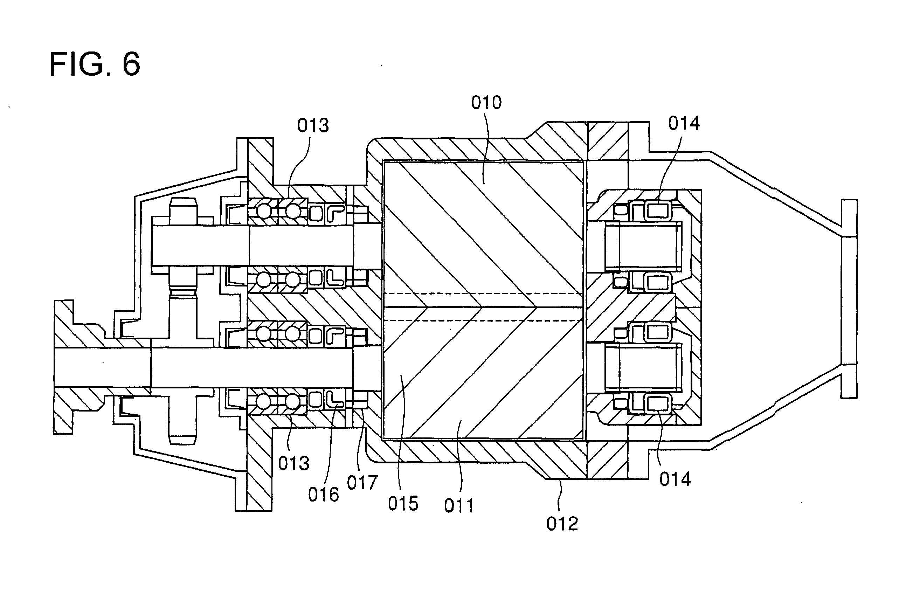

In Japanese Laid-Open Patent Application No.2005-54614 (patent literature 2) is disclosed a screw compressor, in which a non-contact carbon seal is used to restrict leakage of compressed gas from the compressed gas discharge side of the compressor. As shown in FIG. 6, a male rotor 010 and a female rotor 011 are accommodated in a rotor casing 012. The rotor shaft of each of the rotors is supported by bearings 013 in the discharge side and supported by a bearing 014 in the suction side of the compressor. A oil seal 016 and a carbon seal 017 are located between the compression chamber 015 and the discharge side bearings 013. Leakage of compressed gas from the compression chamber 015 toward the bearings 013 is restricted by the carbon seal.

The carbon seal member of the non-contact carbon seal is insufficient in rigidity and it is necessary to cover the carbon seal member with a retaining member such as back metal or outer ring. During operation of the compressor, the rotor shaft and carbon seal rise in temperature, and difference in thermal expansion induces variation of radial clearance between the inner periphery of the carbon seal member and the outer periphery of the rotation shaft. Therefore, material of the shaft and outer ring must be properly selected and size and shape of the outer ring must be properly designed so that said radial clearance is always maintained nearly constant without influenced by temperature rise in operation.

### SUMMARY OF THE INVENTION

The present invention was made in light of the background mentioned above, and the object is to provide a shaft seal device, with which an optimum radial clearance is always maintained between the inner circumferential surface of a carbon ring and an outer circumferential surface of a rotor shaft sleeve when temperature of parts around the shaft seal device varies in operation of the rotary compressor, gas leak through said radial clearance can be suppressed to a minimum not influenced by operation condition of the compressor and intrusion of lubricating oil into the rotor chamber is prevented, and as a result an oil-free rotary compressor can discharge clean compressed gas not contaminated with lubrication oil.

To attain the object, the invention proposes a shaft seal device for an oil-free rotary compressor to be located between the rotor chamber and rotor shaft bearing with a very small radial clearance retained between the inside surface of the shaft seal device and the outer surface of the rotor shaft or an rotor shaft sleeve fixed to the rotor shaft to restrict gas leak between the rotor chamber and bearing side space, wherein the shaft seal device consists of an outer ring and a carbon ring which is fitted into the outer ring with such interference that the interference does not reduce to zero even when they are heated to maximum temperature in operation of the compressor, and the outer ring is made of material having a thermal expansion coefficient coequal to that of the rotor shaft or rotor shaft sleeve.

Thermal expansion coefficient of the carbon ring is about 7.0×10⁻⁶/°C which is smaller than that of metal material. So, there is fear that cracks occur in the carbon ring when temperature increases in operation of the compressor caused by decreased radial clearance between the inside surface of the shaft seal device and the outer surface of the rotor shaft or rotor shaft sleeve fixed to the rotor shaft due to larger heat expansion of the rotor shaft and rotor shaft sleeve than that of the shaft seal device. Therefore, it is necessary to compose the shaft seal device so that said radial clearance is maintained constant or nearly constant not influenced by operation temperature of the compressor.

In the invention, by fitting carbon ring into the outer ring with such interference that the interference is not reduced to zero even when they are heated to a temperature of 250°C which is supposed to be the maximum temperature in operation of the compressor and adopting as material of the outer ring the same material as that of the rotor shaft sleeve, radial clearance between the carbon ring and the rotor shaft sleeve was able to be maintained to be nearly constant under any temperatures in operation of the compressor.

However, when the outer ring is made of material having larger thermal expansion coefficient than that of the rotor shaft and rotor shaft sleeve, the radial clearance increases due to heat expansion of the outer ring which is larger than heat expansion of the rotor shaft or rotor shaft sleeve, and effect of restricting gas leak through the very small radial clearance is decreased.

According to the invention, as the outer ring is made of material having thermal expansion coefficient coequal to that of the rotor shaft or rotor shaft sleeve, the radial clearance between the carbon ring and the rotor shaft or rotor shaft sleeve is maintained nearly constant in hot and cool state. Therefore, there is no fear of occurring cracks in on the carbon ring and increase of the radial clearance which induces increase in gas leakage between the rotor chamber and bearing side space. Thus, an oil-free rotary compressor in which the radial clearance between the carbon ring and the rotor shaft or rotor shaft sleeve is maintained to be optimum and gas leak through the radial clearance is restricted to a minimum always regardless of temperature variations in operation of the compressor, can be provided.

It is preferable that the shaft seal device is located in a rotor shaft seal part between the oil lubricated rotor shaft bearing and the rotor chamber of the compressor at a position nearer to the rotor chamber beyond an oil seal located in the rotor shaft seal part to seal lubrication oil lubricated the bearing.

According to the above described structure, an oil seal is located adjacent to the bearing and the shaft seal device consists of the carbon ring and outer ring is located adjacent to the rotor chamber, so intrusion of lubrication into the rotor chamber is prevented by the oil seal located adjacent to the bearing and gas leak between the rotor chamber and bearing side space is prevented by the shaft seal device, clean compressed gas not contaminated with lubrication oil can be discharged.

The shaft seal device is applied preferably to a tooth type oil-free compressor, and the outer ring is made of the same material as that of the rotor shaft or rotor shaft sleeve. For example, the outer ring of the shaft seal device and the rotor shaft or rotor shaft sleeve are made of stainless steel having the same thermal expansion coefficient. Consequently, the radial clearance between the carbon ring and the rotor shaft or rotor shaft sleeve can be maintained constant regardless of temperature variations in operation of the compressor.

Width of the outer ring in longitudinal direction is 0.7∼1.0 times that of said carbon ring, and radial thickness of said outer ring is 0.7∼1.0 times that of said carbon ring. By determining the width and radial thickness of the outer ring in a range of 0.7 to 1.0 times the width and radial thickness of the carbon ring respectively, proper rigidity of the outer ring can be secured to allow the inner diameter of the carbon ring to increase or decrease in accordance with temperature to keep nearly constant radial clearance between the carbon ring and rotor shaft or rotor shaft sleeve. When the width of the outer ring is smaller than this range, the function of the outer ring to induce enlargement of the inner diameter of the carbon ring when the outer ring expands with increased temperature, is decreased. When the thickness of the outer ring is smaller than this range, rigidity of the outer ring becomes insufficient to achieve the function as a back metal.

With a shaft seal device of the present invention, an optimum radial clearance is maintained between the inner circumferential surface of a carbon ring and an outer circumferential surface of a rotor shaft sleeve when temperature thereof varies in operation of the oil-free rotary compressor, and gas leak through the radial clearance can be suppressed to a minimum not influenced by operation condition of the compressor and intrusion of lubricating oil into the rotor chamber is prevented. As a result, an oil-free rotary compressor able to discharge clean compressed gas not contaminated with lubrication oil can be obtained.

### BRIEF DESCRIPTION OF THE DRAWINGS

FIG.1 is a sectional view of the oil-free rotary compressor to which the shaft seal device of the invention is used.
FIG.2 is a sectional view along lines A-A in FIG.1 for explanation of operation of the tooth type rotary compressor.
FIG.3 is an enlarged detail of a part encircled by a circle B in FIG.1.
FIG.4A is a plan view of the shaft seal device of the invention, and FIG.4B is section along lines C-C in FIG.4A.
FIG.5 a seal structure of rotation shaft disclosed in the patent literature 1.
FIG 6 is a sectional view of the screw compressor disclosed in the patent literature 2 to which a nin-contact carbon seal is used.

### DETAILED DESCRIPTION OF THE PREFERRED EMBODIMENTS

A preferred embodiment of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

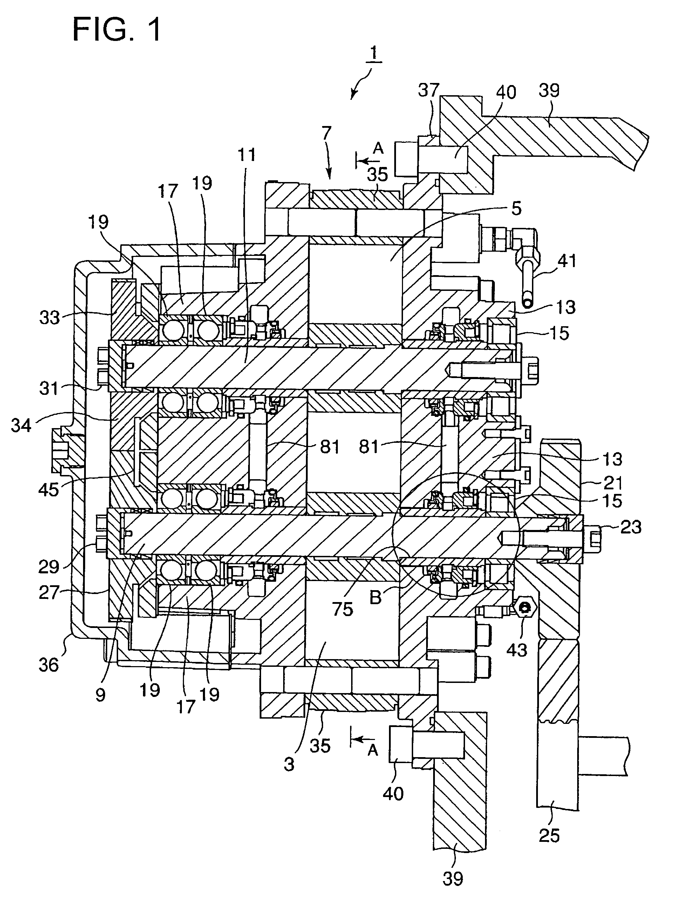

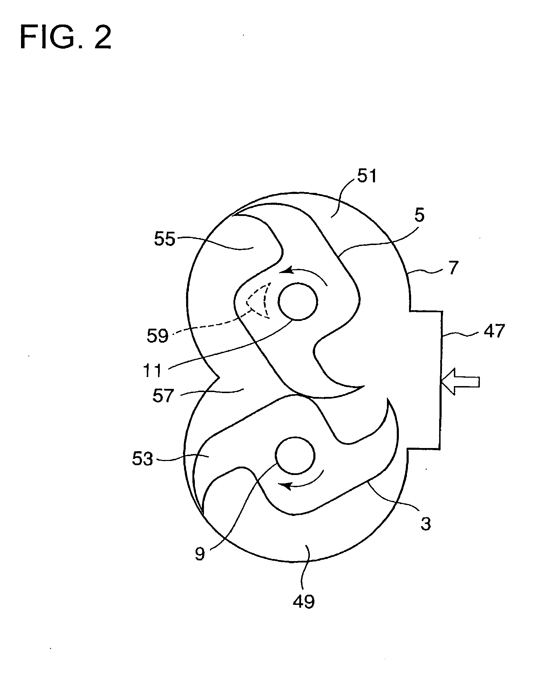

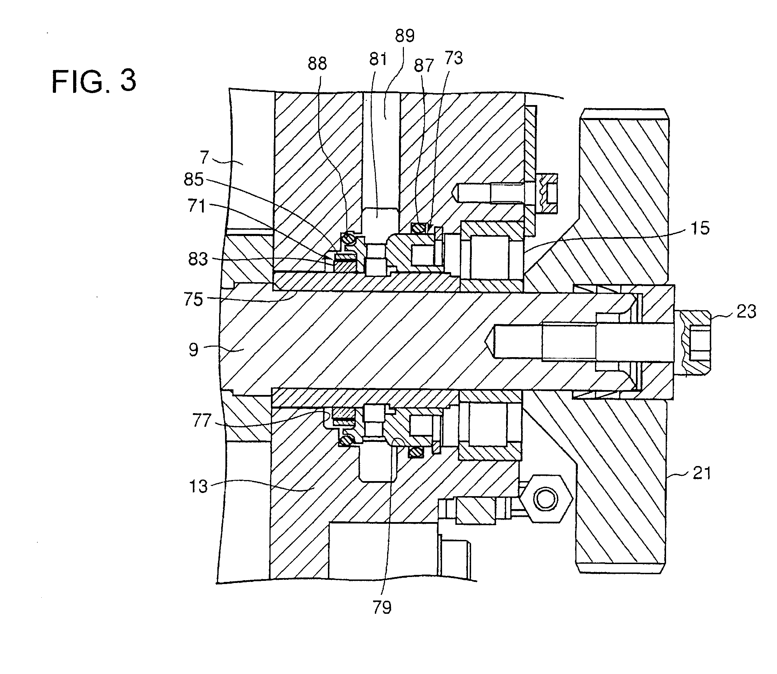

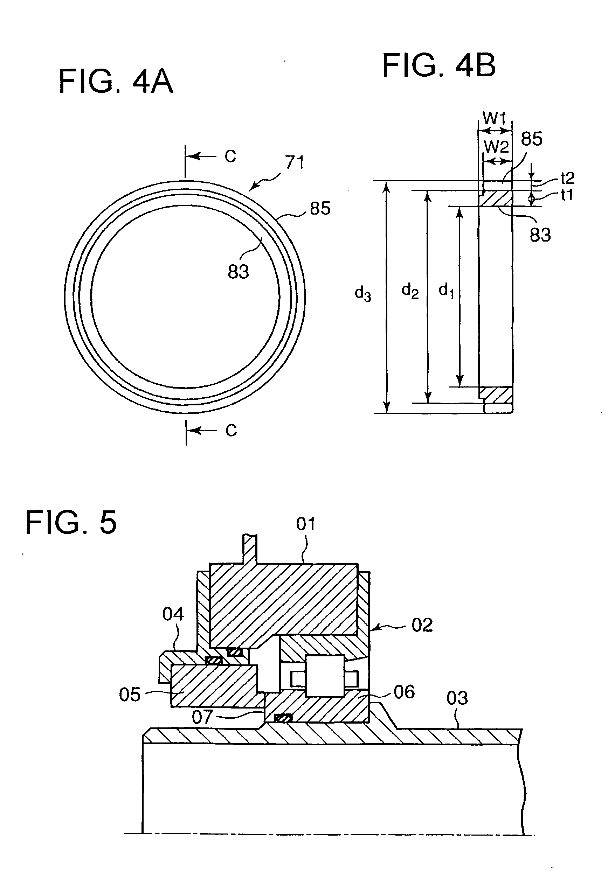

In accompanying drawings, FIG.1 is a sectional view of the oil-free rotary compressor to which the shaft seal device of the invention is used, FIG.2 is a sectional view along lines A-A in FIG.1 for explaining operation of the tooth type rotary compressor, FIG.3 is an enlarged detail of a part encircled by a circle B in FIG.1, FIG.4A is a plan view of the shaft seal device of the invention, and FIG.4B is section along lines C-C in FIG.4A.

Whole construction of an oil-free tooth type rotary compressor to which the shaft seal device of the invention is applied will be explained referring to FIG.1. The oil-free tooth type compressor 1 is a positive displacement rotary compressor consists of two rotors, a male tooth type rotor 3 and a female tooth type rotor 5. The rotors turn in opposite directions in a rotor housing 7. The male rotor 3 and female rotor 5 are fixed to a male rotor shaft 9 and a female rotor shaft 11 respectively by spline connection or screw connection. The rotor housing 7 is composed of a bearing housing 13, a bearing housing 17, and a peripheral housing member 35. The rotors are accommodated in a compression chamber formed by attaching and tightening both the bearing housing 13, 17 to both side faces of the peripheral housing member 35 by tightening bolts.

An end part of the male rotor shaft 9 is supported by the bearing housing 13 rotatably via a roller bearing 15 and the other side thereof is supported rotatably by the bearing housing 17 via a set of angular ball bearings 19.
Similarly, an end part of the female rotor shaft 11 is supported by the bearing housing 13 rotatably via a roller bearing 15 and the other side thereof is supported rotatably by the bearing housing 17 via a set of angular ball bearings 19. Reference numerals 34, 34 are bearing outer race stopper plates.

At an end of the male rotor shaft 9 is attached an input gear 21 and fixed by means of a bolt 23.To the input gear 21 is engaged a drive gear 25 for transmitting driving force from a motor not shown in the drawing.
At the other end of the male rotor shaft 9 is attached timing gear 27 and fixed by means of a bolt 29. The timing gear 27 engages with a timing gear 33 attached to the female rotor shaft 11 and fixed by means of a bolt 31. Rotations of the two rotors are synchronized via the timing gears 27, 33.

The peripheral part of the bearing housing 13 is formed into a flange 37 to which a gear housing 39 is fixed by means of bolts 40. The timing gear side of the bearing housing 17 is attached an end cover 36.

Oil supply pipes 41, 43 are provided inside the gear housing 39. Lubrication oil is supplied to the bearings 15 and 19 from an oil pump not shown in the drawing through the oil pipes 41, 43 and through oil passages in the rotor housing 7 not depicted in the drawing. Lubrication oil is injected against meshing part of the input gear 21 and drive gear 25 and the lubricated oil falls down to be pooled in the bottom of the gear housing 39.

Lubrication oil lubricated the bearing 19 flows out from the bearings 19 through gaps 45 between the bearing outer race stopper plates 34 and hubs of the timing gears 27, 33. The flowed out oil lubricates the timing gears 27, 33, and falls down to the bottom of the end cover 36 to flow down through drain passages in the rotor housing 7 not depicted in the drawing to the bottom of the gear housing 39. Lubrication oil accumulated in the bottom of the gear housing 39 is returned to an oil tank not shown in the drawing.

Now, working of the tooth type rotary compressor will be explained briefly referring to FIG.2.
The tooth type compressor 1 is a positive displacement rotary compressor, and gas entrapped in pockets surrounding the meshing lobes of the rotors is compressed as the volume of the pockets is decreased as the rotors rotate.
As shown in FIG. 2, as the male and female rotors 3 and 5 rotate in opposite directions indicated by arrows, gas sucked from a suction inlet 47 is enclosed in space between the inner face of the rotor housing 7 and the lobes of male and female rotors 3 and 5 respectively is conveyed to the pressure side 55, 57. The volume of the space 55, 57 reduces as the rotors 3 and 5 rotate and gas is compressed until the female rotor 5 uncovers the discharge port 59, and the compressed gas is discharged from the compression chamber through the discharge port 59.

Next, shaft seal part of the compressor will be explained referring to FIG 3 showing an enlarged detail of a part encircled by a circle B in FIG.1. As can be seen in FIG.3, a shaft seal part is provided in the bearing housing 13 between the rotor chamber side end thereof and the bearing 15. In the shaft seal part, a rotor shaft sleeve 75 is fixed to the rotor shaft 9. An air seal 71(shaft seal device of the invention) is located adjacent the rotor chamber in the rotor housing 7 and an oil seal sleeve 73 is located between the air seal 71 and roller bearing 15.
The air seal 71 is fitted into an annular recess 77 of the bearing housing 13, and the oil seal sleeve 73 is inserted in a counterbore 79 of the bearing housing 13. O-rings 87 and 88 serve to seal between the counterbore 79 and outer circumferential surface of the oil seal sleeve 73 and also to prevent rotation of the oil seal 73 by virtue of their friction.

A viscoseal is composed by the inner surface of the oil seal sleeve 73 made of metal and the outer surface of the rotor shaft sleeve 75. A spiral groove, a thread, is formed on the surface of the rotor shaft sleeve 75 such that lubrication oil filled the groove is pressurized by screw pump effect of the thread and forced in a direction toward the roller bearing 15 as the rotor shaft 9 rotates. Spiral groove may be formed in the inner surface of the oil seal sleeve 73.

The oil seal sleeve 73 has an inner groove between its viscoseal zone side and the air seal 71 side which is communicated to an annular groove in the bearing housing 13.
Communicating hole or holes are provided in the bearing housing 13 to connect the annular groove to the outside of the bearing housing 13. The inner groove and the annular groove serve as a buffer space 81.
A shaft seal part as mentioned above is provided in the bearing housing 13 also around the female rotor shaft 11, and the male rotor side buffer space 81 is connected to a female rotor side buffer space via a communication passage 89.
Shaft seal parts are provided similarly in the bearing housing 17 around the male and female rotor shafts 9, 11 between the rotor chamber side end thereof and the bearing 19.
Suction side of the rotor chamber becomes negative in pressure and air is slightly ingested into the rotor chamber from the buffer space 81 through the very small radial clearance between the inner face of the air seal 71 and the outer face of the rotor shaft sleeve 75. As the buffer space 81 is communicated to outside air, the negative pressure propagates to the viscoseal zone. If lubrication oil leaks from the bearing side to the buffer room 81, the oil flows out through the communication hole or holes to the outside of the bearing housing.

The air seal 71 is composed of an inner ring 83 and an outer ring 85. The inner ring 83 is made of carbon and the outer ting 85 is preferably made of material which has a coefficient of linear thermal expansion near equal to that of the rotor shaft sleeve 75. For example, the rotor shaft sleeve 75 is made of SUS(stainless steel) and the outer ring 85 is made of similar SUS material.

When the rotor shaft sleeve 75 and the outer ring 85 of the air seal 71 are made of different material, combination of material as shown in table 1 is preferable.

**Table 1**

| Material of rotor shaft or rotor shaft sleeve | Material of outer ring of the air seal |
|---|---|
| Carbon steels for machine structural use (S45C, etc.), Nodular graphite cast iron (FCD600, etc.). Linear expansivity is about 10 × 10⁻⁶/°C. | PPS (polyphenylenesulfide) glass fiber reinforced resin or PEEK (polyetheretherketone) glass fiber reinforced resin, having linear expansivity of about 11 × 10⁻⁶/°C. |
| Aluminum alloy(A6000,A7000 group duralumin) having linear expansivity of about 23×10⁻⁶/°C. | PPS (polyphenylenesulfide) glass fiber reinforced resin or PEEK (polyetheretherketone) glass fiber reinforced resin, having linear expansivity of about 20~23 × 10⁻⁶/°C. |
| Austenite group stainless steel (SUS304, etc.) having linear expansivity of about 17×10⁻⁶/°C. | Phosphor bronze (C5212, etc.) having linear expansivity of about 17×10⁻⁶/°C. |
| Free-machining brass (C3710, etc) having linear expansivity of about 20 × 10⁻⁶/°C. | Aluminum alloy casting (AC4C, etc.) having linear expansivity of about 23 ×10⁻⁶/ °C , Aluminum alloy di-casting (ADC12, etc.) having linear expansivity of about 21×10⁻⁶/°C. |

Thermal expansion coefficient of carbon ring 83 is about 7.0×10⁻⁶/°C. This is smaller than that of metal (thermal expansion coefficient of steel is about 11.7×10⁻⁶/°C). Therefore, if the inner ring (carbon ring) 83 is not surrounded with the outer ring 85, radial clearance between the outer circumferential surface of the rotor shaft sleeve 75 and the inner circumferential surface of the carbon ring 83 decreases under increased temperature circumstances. So, there is fear that cracks occur in the carbon ring 83 when temperature increases in operation of the compressor caused by decreased radial clearance between the inside surface of the shaft seal device and the outer surface of the rotor shaft sleeve 75 due to larger heat expansion of the rotor shaft slave 75 than that of the carbon ring. Even if the carbon ring 83 is surrounded with the outer ring 85, when thermal expansion coefficient of the outer ring 85 is larger than that of the rotor shaft or rotor shaft sleeve 75, said radial clearance increases under increased temperature resulting increased gas leak through the radial clearance.

Carbon ring 83 is fitted into the outer ring 85 with such interference not to be reduced to zero even when they are heated to a temperature of 250°C which is supposed to be the maximum temperature in operation of the compressor, and material having thermal expansion coefficient coequal to that of the rotor shaft sleeve 75 is adapted as material of the outer ring 85. Accordingly, radial clearance between the carbon ring 83 and the rotor shaft sleeve 75 can be maintained to be nearly constant under any temperatures in operation of the compressor.

Next, relationship between dimensions of the carbon ring 83 and outer ring 85 will be explained referring to FIGS. 4A and 4B. It is preferable that the width W2 of the carbon ring 83 is 0.7~1.0 times the width W1 of the outer ring 85, that is, W2=(0.7~1.0)XW1 so as to allow the outer ring 85 to properly achieve the function as a back metal. When the width W2 of the outer ring is smaller than this range, the function of the outer ring 85 to induce enlargement of the inner diameter of the carbon ring 83 when the outer ring expands with increased temperature, is decreased.

As to radial thickness, the thickness t2 of the outer ring 85, where t2=(d3-d2)/2, is 0.7∼1.0 times the radial thickness t1 of the carbon ring 83, where t1=(d2-d1)/2, that is, t2=(0.7~1.0)×t1. When the thickness t2 of the outer ring 85 is smaller than this range, rigidity of the outer ring 85 becomes insufficient to achieve the function as a back metal.

The air seal 71 composed as mentioned above and the oil seal sleeve 73 which composes a viscoseal in combination with the rotor shaft sleeve 75 are provided in all of the shaft seal parts, i.e. the shaft seal parts surrounding the male and female rotor shafts 9, 11 in the bearing housing 13 and the shaft seal parts surrounding the male and female rotor shafts 9, 11 in the bearing housing 17.

According to the embodiment, the air seal (shaft seal device) 71 can be provided, with which an optimum radial clearance is always maintained between the inner circumferential surface of the carbon ring 83 and the outer circumferential surface of the rotor shaft sleeve 75 when temperature of the rotor shafts 9, 11, rotor shaft sleeve 75, carbon ring 83, and outer ring 85 retaining the carbon ring 83 varies in operation of the oil-free tooth type compressor, and gas leak through the radial clearance can be suppressed to a minimum not influenced by operation condition of the compressor and intrusion of lubricating oil into the rotor chamber is prevented. As a result, an oil-free rotary compressor is operated discharging clean compressed gas not contaminated with lubrication oil.

## Claims

1. A shaft seal device for an oil-free rotary compressor to be located between a rotor chamber and rotor shaft bearing with a very small radial clearance retained between the inside surface of the shaft seal device and the outer surface of the rotor shaft or an rotor shaft sleeve fixed to the rotor shaft to restrict gas leak between the rotor chamber and bearing side space, wherein the shaft seal device consists of an outer ring and a carbon ring which is fitted into the outer ring with such interference that the interference does not reduce to zero even when they are heated to maximum temperature in operation of the compressor, and the outer ring is made of material having a thermal expansion coefficient coequal to that of the rotor shaft or rotor shaft sleeve.

2. A shaft seal device for an oil-free rotary compressor according to claim 1, wherein the shaft seal device is located in a rotor shaft seal part between the oil lubricated rotor shaft bearing and the rotor chamber of the compressor at a position nearer to the rotor chamber beyond an oil seal located in the rotor shaft seal part to seal lubrication oil lubricated the bearing.

3. A shaft seal device for an oil-free rotary compressor according to claim 1 or 2, wherein the compressor is a tooth type oil-free compressor.

4. A shaft seal device for an oil-free rotary compressor according to any one of claims 1-3, wherein said outer ring is made of the same material as that of the rotor shaft or rotor shaft sleeve.

5. A shaft seal device for an oil-free rotary compressor according to any one of claims 1-4, wherein width of said outer ring in longitudinal direction is 0.7~1.0 times that of said carbon ring.

6. A shaft seal device for an oil-free rotary compressor according to any one of claims 1-4, wherein radial thickness of said outer ring is 0.7∼1.0 times that of said carbon ring.
